# FASCICULE DE BREVET EUROPEEN

(11) **EP 1 383 228 B1**
(45) Date de publication et mention de la délivrance du brevet: **07.03.2007**
(21) Numéro de dépôt: 03291694.2
(22) Date de dépôt: 08.07.2003
(51) Int. Cl.: H02K 5/20

(54) **Alternateur avec grilles de ventilation**
Wechselstromgenerator mit Lüftungsgitter
Alternator with ventilation grills

(30) Priorité: 10.07.2002 FR 0208666; 10.07.2002 FR 0208667; 10.07.2002 FR 0208668; 10.07.2002 FR 0208671
(43) Date de publication de la demande: 21.01.2004
(73) Titulaire: MOTEURS LEROY-SOMER, 16015 Angouleme Cédex (FR)
(72) Inventeur: Vohlgemuth, Patrick, 16110 La Rochefoucauld (FR); Manfe, Philippe, 16730 Linars (FR); Czajkowski, Francois, 16730 Linars (FR)
(74) Mandataire: Tanty, François

(56) Documents cités:
- EP-A- 1 037 361
- BE-A- 374 045
- DE-A- 19 617 265
- US-A- 5 182 482

## Description

La présente invention concerne les machines électriques tournantes, et plus particulièrement mais non exclusivement, les alternateurs destinés aux groupes électrogènes et d'une puissance allant par exemple de quelques kilowatts à quelques dizaines de kilowatts, par exemple inférieure à 30 kW.

La demande EP-A2-1 081 828 décrit un alternateur comportant un rotor entraînant un ventilateur. Ce ventilateur tourne dans un logement définissant deux passages chacun en forme de volute, pour la sortie de l'air brassé par le ventilateur. Chaque passage offre une section croissante à l'air gagnant la sortie. Le logement précité est défini par une pièce rapportée sur le corps cylindrique du carter. D'une manière générale, les performances électriques d'un alternateur dépendent de l'efficacité du refroidissement et il est souhaitable que celle-ci soit la plus élevée possible.

La demande japonaise JP 08223853 a pour objet un générateur comportant un rotor et un stator logés dans un carter composé d'une première pièce en forme de bol comportant des orifices de sortie d'air et d'une deuxième pièce comportant des orifices d'entrée d'air, les première et deuxième pièces étant rattachées l'une à l'autre par des vis.

On connaît aussi des alternateurs pour groupe électrogène, comportant :
- un carter de forme allongée,
- un rotor ayant un arbre pouvant tourner à l'intérieur du carter autour d'un axe géométrique de rotation,
- un ventilateur entraîné en rotation par le rotor.

Dans ces alternateurs connus, les grilles de protection des ouvertures d'entrée et de sortie d'air sont constituées par des pièces indépendantes, ce qui implique des opérations d'assemblage sur le carter lors de la fabrication de l'alternateur et augmente le prix de revient de celui-ci.

En outre, cela peut rendre la fixation de certains alternateurs sur le moteur thermique relativement fastidieuse, lorsque l'accès aux éléments de fixation s'effectue à travers les ouvertures par lesquelles l'air de refroidissement sort. Les grilles de protection doivent être enlevées pour permettre l'accès aux éléments de fixation, puis remises en place ensuite.

On connaît aussi des alternateurs pour groupe électrogène, comportant :
- un carter de forme allongée
- un rotor ayant un arbre pouvant tourner à l'intérieur du carter autour d'un axe géométrique de rotation,
- au moins une bride de fixation de l'alternateur à une extrémité.

La fixation de certains alternateurs de ce type sur le moteur thermique est relativement fastidieuse, car l'accès aux éléments de fixation s'effectue à travers les ouvertures par lesquelles l'air de refroidissement sort.

Il existe un besoin pour disposer d'un alternateur ayant un coût de fabrication réduit tout en offrant des performances électriques et une fiabilité satisfaisantes.

Il existe également un besoin pour faciliter la circulation de l'air destiné au refroidissement de la machine.

Il existe encore un besoin pour disposer d'une machine électrique, notamment un alternateur, dans lequel le montage ou le démontage du porte-balais soit facilité.

La présente invention vise notamment à répondre à tout ou partie de ces besoins.

Selon un premier de ses aspects, l'invention a pour objet une machine tournante électrique comportant :
- un carter de forme allongée,
- un rotor ayant un arbre pouvant tourner à l'intérieur du carter autour d'un axe géométrique de rotation,
- un ventilateur entraîné en rotation par le rotor,
cette machine pouvant se caractériser par le fait que le carter comporte au moins une grille d'entrée d'air et au moins une grille de sortie de l'air qui sont réalisées d'une seule pièce avec le carter.

On évite ainsi d'avoir à rapporter sur le carter les grilles de protection des alternateurs connus, ce qui permet de diminuer le temps de main d'oeuvre nécessaire à la fabrication de l'alternateur.

Dans un exemple de mise en oeuvre de l'invention, le carter est réalisé par fonderie, notamment en aluminium injecté.

Le carter peut comporter, à une première extrémité longitudinale, une bride et à une deuxième extrémité longitudinale, opposée à la première, une paroi d'extrémité réalisée d'une seule pièce avec le carter et qui est ajourée pour former une grille pour l'entrée de l'air de refroidissement dans le carter.

Cette paroi d'extrémité peut comporter, sur sa face intérieure, un relief permettant la fixation d'un porte-balais. Le relief précité peut comporter une glissière et le porte-balais peut être configuré pour coulisser dans cette glissière lors de son montage dans le carter. Une telle configuration facilite le montage du porte-balais et permet de réduire encore la durée de fabrication de l'alternateur. Le démontage du porte-balais, lors d'une opération d'entretien, s'en trouve lui aussi facilité.

Le carter peut, dans une réalisation particulière, comporter deux grilles latérales réalisées d'une seule pièce avec le carter et situées respectivement sur les côtés gauche et droit du carter lorsque l'alternateur est observé selon l'axe géométrique de rotation du rotor.

Le carter peut comporter au moins un passage en forme de volute débouchant sur une grille latérale, et notamment deux passages en forme de volute respectivement associés aux deux grilles latérales précitées.

Ces passages en forme de volute peuvent être réalisés lors du moulage du carter, ce qui évite des opérations d'assemblage ultérieures.

Une grille latérale au moins peut comporter des barreaux ayant chacun un axe longitudinal, de préférence curviligne, avec une portion concave vers le ventilateur. Chaque barreau peut être orienté sensiblement parallèlement à un plan perpendiculaire à l'axe géométrique de rotation du rotor. Les barreaux peuvent ainsi être sensiblement parallèles à un plan vertical, lorsque l'axe géométrique de rotation du rotor est horizontal.

Selon un autre aspect de l'invention, chaque grille latérale peut être dépourvue de barreaux s'étendant sensiblement parallèlement à l'axe géométrique de rotation du rotor, ce qui permet de diminuer la perte de charge subie par l'air à la traversée de la grille et d'améliorer ainsi le rendement du ventilateur et l'efficacité du refroidissement.

Pour faciliter la réalisation des barreaux de la grille, ces derniers peuvent être moulés avec un voile de matière qui les relient sur leur côté radialement intérieur. Ce voile qui peut présenter une épaisseur relativement faible permet de renforcer la tenue mécanique des barreaux lors du refroidissement de la matière suite au moulage. Ce voile est éliminé lors d'une opération d'usinage de la surface intérieure du carter à sa sortie de la fonderie. Avantageusement, le procédé de fabrication du carter comporte l'étape consistant, après le moulage du carter, à éliminer progressivement par usinage en une seule passe, le voile qui s'étend entre les barreaux. Une deuxième passe, qui risquerait d'endommager les barreaux, est évitée.

On peut usiner l'intérieur du carter lorsque le stator est déjà en place dans celui-ci, de façon à assurer plus facilement la concentricité des surfaces usinées.

Le carter peut comporter des extensions de support d'un capot de protection d'un circuit électrique, notamment un circuit électrique de régulation et de raccordement de l'alternateur, ces extensions comportant des ouvertures d'entrée d'air. Le carter peut comporter au moins une ouverture débouchant sous le capot, pour permettre une aspiration de l'air sous celui-ci, durant le fonctionnement de l'alternateur. L'augmentation du rendement du ventilateur, grâce notamment aux grilles latérales dépourvues de barreaux parallèles à l'axe géométrique de rotation du rotor et à la présence des passages en forme de volute, permet d'obtenir un débit d'air de refroidissement, sous le capot, relativement important.

Le carter peut comporter des nervures axiales non usinées sur lesquelles repose le stator. Le fait que ces nervures soient non usinées permet de diminuer encore le coût de fabrication, en évitant une opération d'usinage spécifique.

Le carter peut comporter un corps cylindrique et la bride peut comporter des passages pour des éléments de fixation ayant des axes situés radialement à l'extérieur de l'enveloppe du corps cylindrique. On peut ainsi avoir facilement accès aux éléments de fixation servant à fixer l'alternateur sur un moteur thermique, par exemple, sans avoir à procéder à un démontage des grilles de protection.

L'invention a encore pour objet, selon un autre de ses aspects, indépendamment ou en combinaison avec ce qui précède, une machine électrique tournante comportant :
- un carter,
- un rotor pouvant tourner à l'intérieur du carter autour d'un axe géométrique de rotation,
- un ventilateur fixé sur le rotor,
- au moins une grille de sortie de l'air brassé par le ventilateur,
la grille étant dépourvue de barreaux s'étendant sensiblement parallèlement à l'axe géométrique de rotation du rotor ou en comportant un nombre inférieur ou égal à celui des barreaux s'étendant sensiblement parallèlement à un plan perpendiculaire à l'axe géométrique de rotation.

A la différence des machines connues, comportant des grilles rapportées sur le carter, ces grilles comprenant un grand nombre de barreaux perpendiculaires entre eux, dans l'invention au moins l'une des grilles est dépourvue de barreaux sensiblement parallèles à l'axe géométrique de rotation ou en comporte un nombre relativement faible.

Il en résulte que la perte de charge subie par l'air à la traversée de la grille est plus faible que si la grille comportait un nombre important de barreaux s'étendant sensiblement parallèlement à l'axe géométrique de rotation du rotor. Les barreaux peuvent ainsi être réalisés avec une section transversale plus importante pour une perte de charge équivalente, ce qui peut faciliter leur réalisation par fonderie d'un seul tenant avec le carter.

De préférence, la grille est dépourvue de barreaux s'étendant sensiblement parallèlement à l'axe géométrique de rotation du rotor.

Le carter peut comporter des passages pour la sortie de l'air qui présentent une section offerte à la circulation de l'air qui augmente en se rapprochant de la sortie. Ces passages peuvent être en forme de volute, par exemple.

L'air peut sortir radialement.

Les barreaux de la grille peuvent être réalisés d'une seule pièce avec le carter, comme évoqué plus haut.

Les barreaux peuvent présenter une partie centrale ayant un axe longitudinal curviligne, concave vers le ventilateur. Cette partie centrale peut se raccorder au carter par une portion de raccordement formant avec la portion centrale une concavité tournée vers l'extérieur. Cette partie de raccordement peut être adjacente à une portion élargie du passage pour la sortie de l'air.

Les barreaux de la grille peuvent présenter un côté intérieur usiné.

La grille peut comporter deux barreaux.

Le carter peut comporter, à une extrémité, une paroi transversale ajourée permettant l'aspiration de l'air, et le carter peut comporter un corps cylindrique pourvu d'une ouverture débouchant sous un capot de protection, des extensions sur lesquelles le capot vient en appui étant par ailleurs réalisées sur le carter, ces extensions étant pourvues d'ouvertures, l'air étant aspiré lors du fonctionnement du ventilateur par la paroi transversale ajourée, par les ouvertures des extensions et par l'ouverture réalisée sur le corps cylindrique du carter et refoulé par deux grilles de sortie de l'air telles que définies plus haut.

L'invention a encore pour objet, selon un autre de ses aspects, indépendamment ou en combinaison avec ce qui précède, un ensemble comportant un alternateur et un organe de liaison permettant de fixer l'alternateur sur un moteur thermique, l'alternateur comportant un carter ayant un corps cylindrique et une bride, l'ensemble pouvant se caractériser par le fait que la bride comporte des passages pour des éléments de fixation de l'alternateur sur l'organe de liaison, ces passages ayant des axes situés à l'extérieur de l'enveloppe du corps cylindrique du carter, l'organe de liaison comportant un premier ensemble de trous pour la fixation de l'organe de liaison sur le moteur thermique et un deuxième ensemble de trous disposés de manière à se superposer aux passages de la bride, pour la fixation de l'alternateur sur l'organe de liaison.

Grâce à l'utilisation d'un tel organe de liaison, la fixation de l'alternateur sur le moteur thermique est facilitée et l'on peut éviter, par exemple, d'avoir à accéder à des éléments de fixation à travers des ouvertures de sortie de l'air de refroidissement de l'alternateur. Il peut ne plus être nécessaire de prévoir des grilles de protection amovibles et le carter peut comporter des barreaux s'étendant dans les ouvertures de sortie de l'air, réalisés d'une seule pièce avec le carter, par fonderie par exemple.

L'organe de liaison peut comporter des écrous fixés sur une face d'une plaque, cette face pouvant être située en regard du moteur thermique, ces écrous pouvant être destinés à recevoir des vis introduites à travers des trous du deuxième ensemble de trous.

L'organe de liaison peut comporter une première portion annulaire plane sur laquelle sont réalisés les trous du premier ensemble de trous et une deuxième portion annulaire plane sur laquelle sont réalisés les trous d'un deuxième ensemble de trous, la deuxième portion annulaire étant décalée axialement par rapport à la première portion annulaire.

Le décalage entre les première et deuxième portions annulaires peut être supérieur à l'épaisseur des écrous.

L'organe de liaison peut comporter des nervures de renforcement.

L'organe de liaison peut comporter des parties saillantes, en forme de portions de cercle destinées à coopérer avec le carter de l'alternateur, pour contribuer au centrage de l'organe de liaison sur l'alternateur.

La bride de l'alternateur peut être réalisée d'une seule pièce avec le carter.

L'invention a encore pour objet, selon un autre de ses aspects, indépendamment ou en combinaison avec ce qui précède, un groupe électrogène comportant un alternateur et un moteur thermique, ce groupe pouvant se caractériser par le fait que l'alternateur est fixé sur le moteur thermique par l'intermédiaire d'un organe de liaison.

Cet organe de liaison peut être configuré pour permettre, dans un premier temps, sa fixation sur le moteur thermique et, dans un deuxième temps, la fixation de l'alternateur sur l'organe de liaison.

L'organe de liaison peut comporter des trous permettant sa fixation sur le moteur thermique et des écrous pour recevoir des vis de fixation de l'alternateur sur l'organe de liaison.

L'invention a encore pour objet, selon un autre de ses aspects, indépendamment ou en combinaison avec ce qui précède, un organe de liaison pour fixer un alternateur sur un moteur thermique, comportant :
- une plaque pourvue d'une ouverture permettant l'accouplement d'un arbre du rotor de l'alternateur avec le moteur thermique,
- un premier ensemble de trous pour la fixation de la plaque sur le moteur thermique,
- un deuxième ensemble de trous situés radialement à l'extérieur des premiers, pour la fixation de l'alternateur sur la plaque.

L'invention a encore pour objet, selon un autre de ses aspects, indépendamment ou en combinaison avec ce qui précède, une machine électrique tournante comportant un stator et un rotor pouvant tourner autour d'un axe géométrique de rotation à l'intérieur du stator, le rotor comportant une carcasse sur laquelle sont disposés des bobinages et des cales de maintien des bobinages, au moins une cale définissant, lorsque observée en section dans un plan perpendiculaire à l'axe géométrique de rotation, une concavité ouverte vers le stator.

La présence d'une telle concavité facilite le passage de l'air de refroidissement, de sorte que le refroidissement de la machine est amélioré.

L'invention a encore pour objet, selon un autre de ses aspects, indépendamment ou en combinaison avec ce qui précède, une machine tournante électrique comportant :
- un rotor pouvant tourner autour d'un axe géométrique de rotation, ce rotor comprenant :
   - une carcasse magnétique comportant des encoches recevant des bobinages et,
   - des amortisseurs comportant des conducteurs électriques traversant des passages correspondants de la carcasse magnétique,
cette machine pouvant se caractériser par le fait que lesdits passages sont disposés, lorsque le rotor est observé dans un plan perpendiculaire à l'axe géométrique de rotation, de manière non symétrique par rapport à tout plan contenant l'axe géométrique de rotation.

Grâce à cette disposition des passages, l'atténuation des harmoniques et/ou la circulation du flux magnétique peut être améliorée.

L'écartement entre deux passages consécutifs, lorsque l'on se déplace circonférentiellement autour de l'axe géométrique de rotation du rotor d'un côté d'un plan médian, peut être non constant. En particulier, cet écartement peut varier, par exemple de manière monotone, et augmenter lorsque l'on se déplace circonférentiellement dans le sens de rotation du rotor. Cela peut permettre d'améliorer le fonctionnement de la machine, en charge notamment.

Selon un autre aspect de l'invention, au moins un passage peut présenter une section transversale non circulaire. En particulier, au moins un passage peut présenter une section transversale oblongue, ayant un axe de plus grande dimension orienté sensiblement radialement. Une telle disposition peut faciliter le passage du flux.

L'invention a encore pour objet, indépendamment ou en combinaison avec ce qui précède, une machine électrique tournante, comportant :
- un carter,
- un rotor pouvant tourner à l'intérieur du carter,
- un porte-balais comportant des balais configurés pour venir en contact électrique avec le rotor,
cette machine pouvant être caractérisée par le fait que le porte-balais est fixé sur une face intérieure d'une paroi transversale du carter, réalisée d'une seule pièce avec celui-ci, comportant une glissière permettant la fixation du porte-balais.

Une telle configuration facilite le montage du porte-balais et permet de réduire la durée de fabrication de la machine.

Le porte-balais est configuré pour pouvoir coulisser dans la glissière lors de son montage dans le carter. Le démontage du porte-balais, lors d'une opération d'entretien, s'en trouve lui aussi facilité.

La glissière peut également permettre, le cas échéant, de positionner radialement le porte-balais, relativement à l'arbre du rotor.

La paroi transversale peut être située à une extrémité longitudinale du carter, et peut être traversée, par exemple, par une pluralité d'ouvertures d'entrée d'air.

Le carter peut comporter un corps cylindrique traversé par une ouverture, par exemple attenante à la glissière précitée, à travers laquelle peut s'effectuer la mise en place ou le démontage du porte-balais.

Cette ouverture peut servir également à l'entrée d'air dans le carter, pour le refroidissement de celui-ci.

Le porte-balais peut être immobilisé dans la glissière par un élément de fixation tel que par exemple une vis introduite à travers une extension du porte-balais et vissée dans le carter. L'extension précitée peut être configurée pour permettre de régler légèrement la position radiale du porte-balais.

Le porte-balais peut comporter des voiles de rigidification s'étendant parallèlement à un plan contenant l'axe géométrique de rotation du rotor.

La machine peut constituer un alternateur, notamment pour groupe électrogène.

La glissière peut être orientée radialement.

La machine peut comporter ou non des balais et un porte-balais. En l'absence de balais, les bobinages d'inducteur peuvent être reliés à des condensateurs.

Les différents aspects de l'invention définis ci-dessus peuvent avantageusement être mis en oeuvre au sein d'une même machine, en particulier un alternateur, mais il peut également en être autrement et l'un de ces aspects peut être mis en oeuvre d'une manière indépendante.

L'invention pourra être mieux comprise à la lecture de la description qui va suivre, d'un exemple de mise en oeuvre non limitatif, et à l'examen du dessin annexé, sur lequel :
- la figure 1 représente, de manière schématique et en perspective, un exemple de carter d'alternateur réalisé conformément à l'invention,
- la figure 2 est une coupe axiale, partielle et schématique, d'un alternateur comportant le carter de la figure 1,
- la figure 3 représente isolément, en vue de côté, le carter de la figure 1,
- la figure 4 est une vue de dessus, schématique et partielle, selon la flèche IV de la figure 3,
- la figure 5 est une vue de face, schématique et partielle, avec arrachement, selon la flèche V de la figure 4,

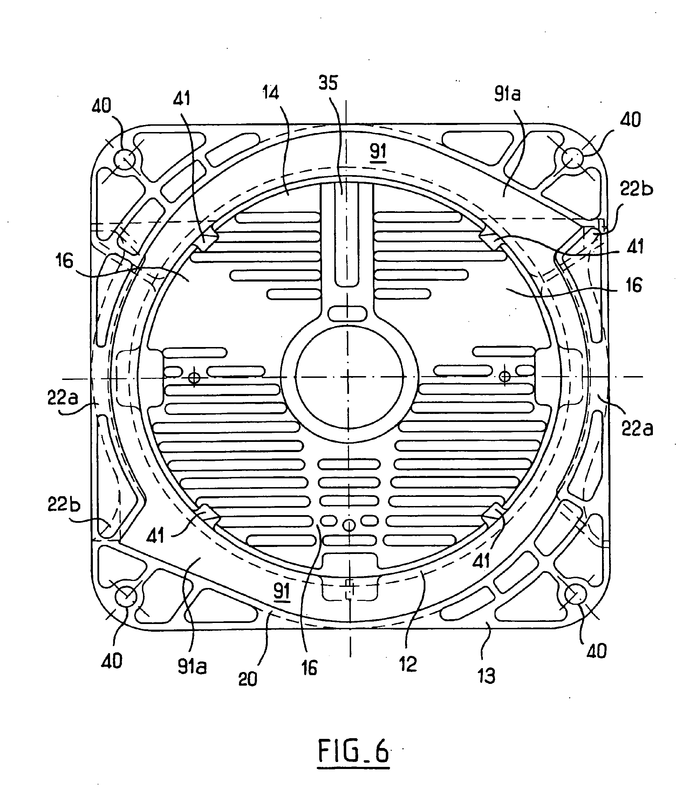

- la figure 6 est une vue de face, schématique et partielle, selon la flèche VI de la figure 4,
- la figure 7 représente isolément, en coupe dans un plan médian, un porte-balais,
- la figure 8 est une vue de dessus, schématique et partielle, selon la flèche VIII de la figure 7,
- la figure 16 représente isolément, en vue de face, la pièce de liaison, et
- la figure 17 est une coupe selon XVII-XVII de la figure 16.

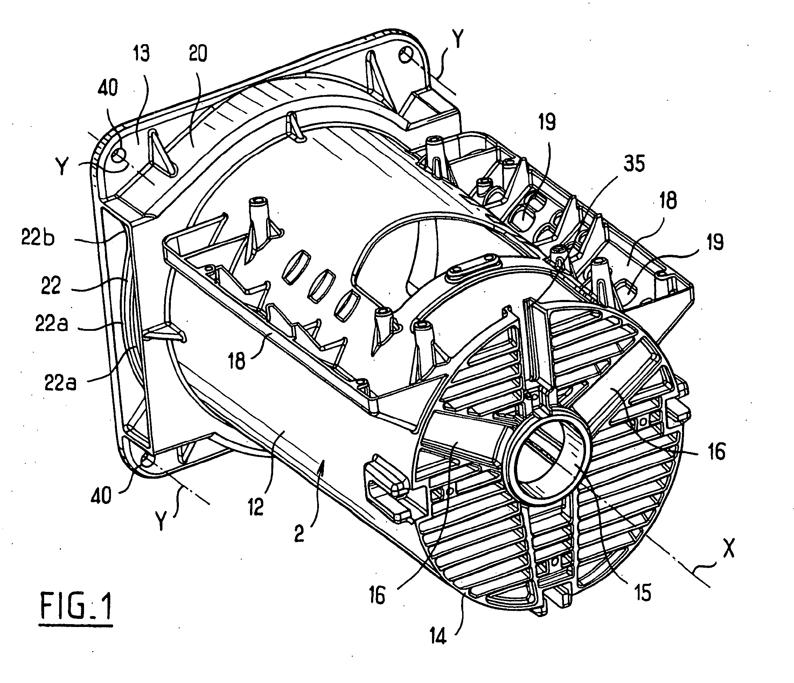

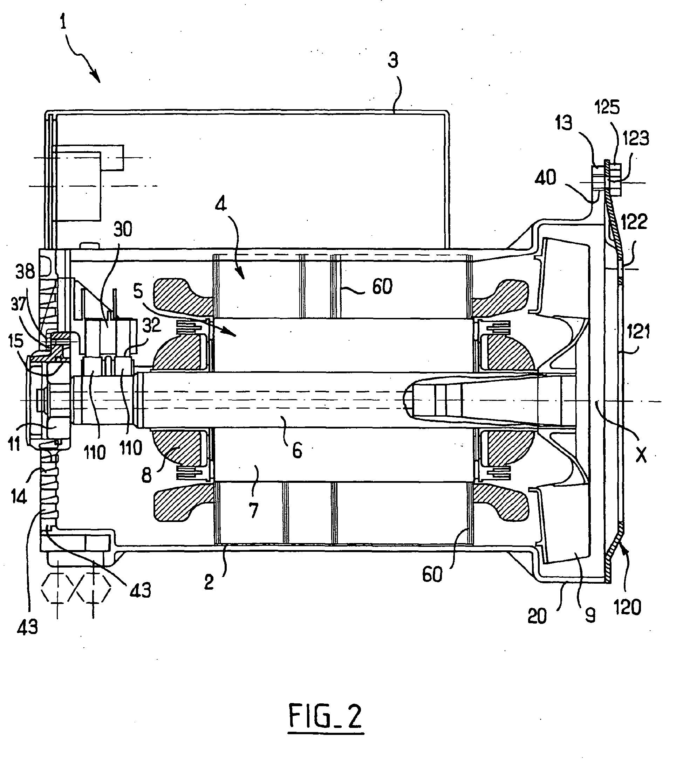

On a représenté aux figures 1 et 2 un alternateur 1 comportant un carter métallique 2 et un capot 3 rapporté sur le carter 2. L'alternateur 1 est destiné, dans l'exemple considéré, à être fixé sur un moteur thermique, non représenté, pour former un groupe électrogène. Le capot 3 qui peut être réalisé en métal ou en matière plastique abrite, par exemple, un circuit électrique conventionnel non apparent sur les figures, de régulation et de raccordement de l'alternateur.

L'alternateur 1 comporte, comme on peut le voir sur la figure 2, à l'intérieur du carter 3, un stator 4 et un rotor 5 pouvant tourner à l'intérieur du stator 4 autour d'un axe géométrique de rotation X.

Le rotor 5 comporte un arbre 6 sur lequel est fixée une carcasse magnétique 7 recevant des bobinages d'inducteur 8.

Le rotor 5 entraîne en rotation un ventilateur 9 destiné à générer un courant d'air de refroidissement.

### Carter

Le carter 2 comporte un corps cylindrique de révolution 12, qui se raccorde à une première extrémité longitudinale, par une partie élargie 20, à une bride 13 servant à la fixation de l'alternateur sur le moteur thermique, via un organe de liaison, comme cela sera précisé dans la suite.

La bride 13 comporte des perçages 40 chacun d'axe Y, qui se situent radialement à l'extérieur de l'enveloppe du corps cylindrique 12.

Le carter 2 comporte également, à une deuxième extrémité longitudinale opposée à la première, une paroi transversale ajourée 14 et un palier 15 de support de l'arbre du rotor.

Des nervures 16 de renforcement s'étendent radialement entre le palier 15 et le corps cylindrique 12.

La bride 13 et le palier 15 sont réalisés d'un seul tenant avec le reste du carter, par fonderie d'aluminium dans l'exemple considéré.

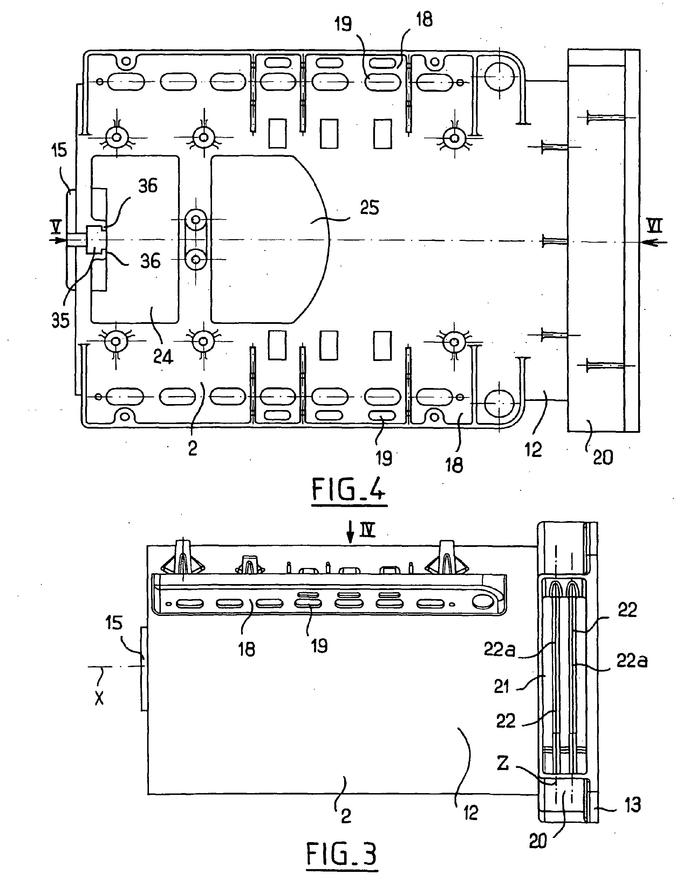

On voit sur les figures 1 et 3 notamment que le carter 2 comporte en partie supérieure deux extensions latérales 18, s'étendant sur la majeure partie du corps cylindrique 12, sur lesquelles repose le capot 3, ces extensions 18 étant pourvues chacune d'une pluralité d'ouvertures 19 permettant une entrée d'air sous le capot, comme cela sera précisé plus loin.

La partie élargie 20 qui est réalisée d'une seule pièce avec le reste du carter définit un logement pour le ventilateur 9.

Deux ouvertures latérales 21 sont réalisées dans la partie élargie 20 pour permettre la sortie de l'air de refroidissement. L'une seulement de ces ouvertures est apparente sur les figures 1 et 3. Des barreaux de protection 22 sont présents dans chaque ouverture 21 pour protéger le personnel d'un contact avec le ventilateur en fonctionnement. Les barreaux 22 sont réalisés d'un seul tenant avec le carter 2, par fonderie. Avant usinage, les barreaux 22 sont liés du côté intérieur par un voile de matière venu de fonderie.

Le carter 2 subit, après son moulage et fixation du stator, un usinage destiné notamment à réaliser une surface cylindrique de révolution autour de l'axe X à l'intérieur du palier 15 pour recevoir une cage 11 contenant des roulements de support de l'arbre du rotor.

Le côté radialement intérieur des barreaux 22 est usiné pour enlever le voile précité. Cet usinage a lieu en une seule passe, afin d'éviter une deuxième passe qui serait susceptible d'endommager les barreaux 22.

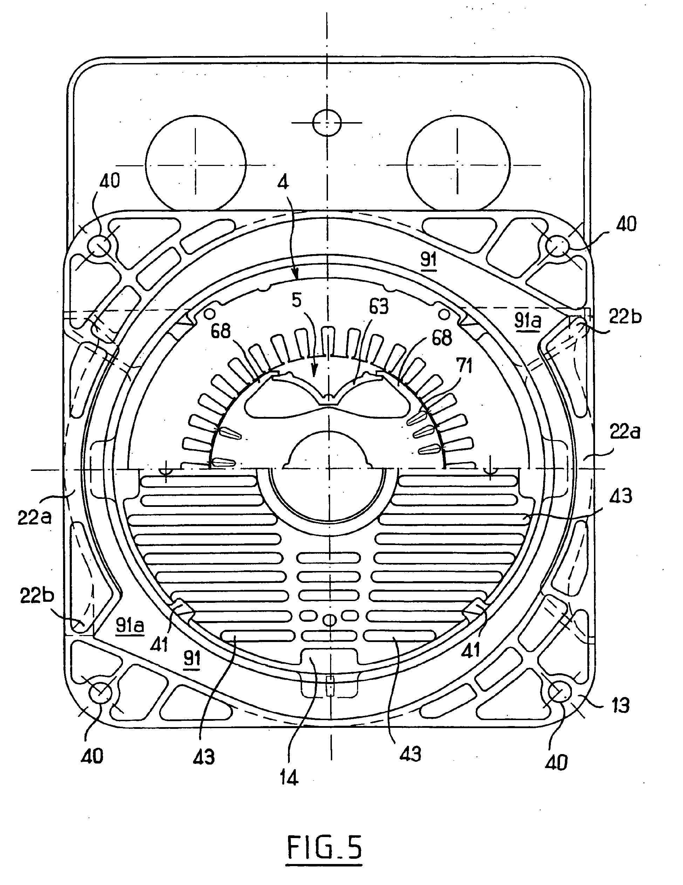

On voit sur la figure 5 que des nervures 41 forment saillie sur la surface radialement intérieure du corps cylindrique 12, pour la fixation du stator. Les nervures 41 sont réalisées par moulage avec suffisamment de précision pour ne pas avoir à subir d'usinage.

La paroi transversale 14 comporte des ajours 43 pour permettre une entrée d'air de refroidissement dans le carter.

### Grilles de sortie d'air

Les barreaux 22 présentent chacun un axe longitudinal Z qui s'étend, comme on peut le voir notamment sur la figure 3, parallèlement à un plan perpendiculaire à l'axe géométrique X de rotation du rotor, soit sensiblement verticalement dans l'exemple considéré. L'axe Z est non rectiligne, les barreaux 22 comportant chacun une portion centrale 22a curviligne ayant un côté intérieur concave vers l'axe X.

On peut remarquer également, à l'examen de la figure 3, que les barreaux 22 se raccordent à leurs extrémités longitudinales au reste du carter 2 et sont dépourvus, sur leur longueur, entre leurs extrémités longitudinales, de liaisons entre eux. Les grilles formées par les barreaux 22 sont donc dépourvues, dans l'exemple considéré, de barreaux horizontaux. Cette disposition permet de diminuer la perte de charge à la traversée des ouvertures 21 et d'améliorer l'efficacité de la ventilation.

On voit sur la figure 5 que la partie élargie 20 définit deux passages 91 en forme de volute. Ces deux passages 91 sont, dans l'exemple considéré, sensiblement l'image l'un de l'autre par une symétrie axiale d'axe X.

Chaque passage 91 présente une section offerte au passage de l'air qui augmente en se rapprochant de la sortie.

Sur la figure 5, le ventilateur tourne dans le sens des aiguilles d'une montre.

Chaque passage 91 comporte une portion élargie 91a adjacente à une portion 22b des barreaux 22. Cette portion 22b se raccorde à une extrémité au carter 2 et à l'autre extrémité à la portion centrale 22a correspondante et forme avec cette dernière une concavité tournée vers l'extérieur. Cela permet d'avoir la portion de raccordement 22b dirigée sensiblement perpendiculairement à la direction d'écoulement de l'air.

Les barreaux 22 sont au nombre de deux par ouverture latérale 21, dans l'exemple considéré, mais ce nombre pourrait, bien entendu, être différent.

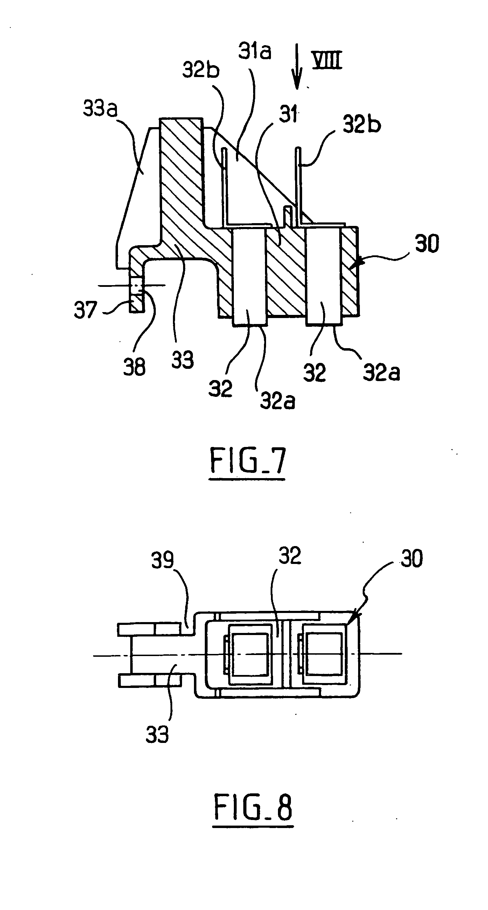

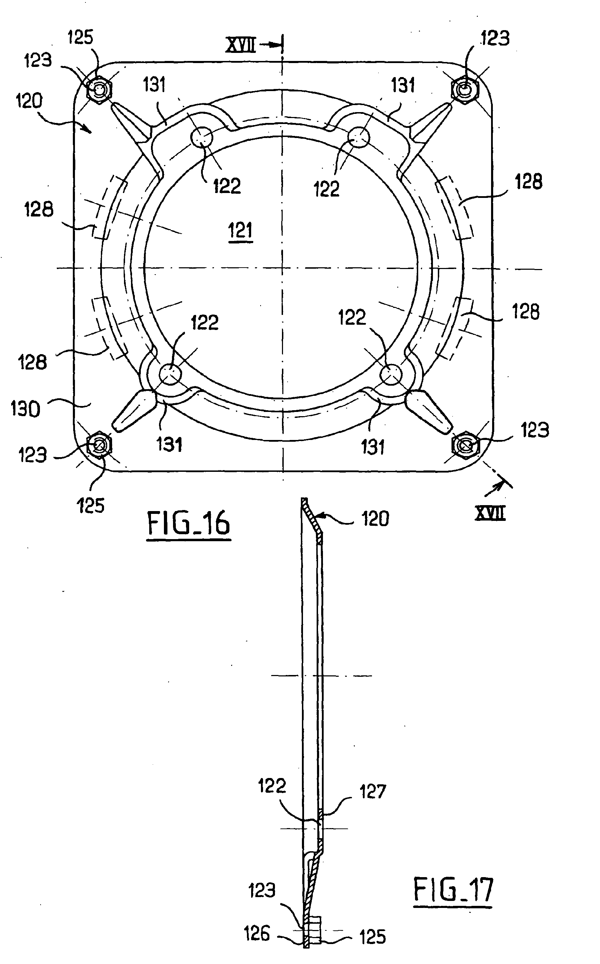

Le carter 2 comporte, en partie supérieure, comme on peut le voir sur la figure 4, une première ouverture 24 destinée à permettre la fixation à l'intérieur du carter d'un porte-balais 30, représenté schématiquement sur les figures 7 et 8.

Le carter 2 comporte également, en partie supérieure, une deuxième ouverture 25 destinée à permettre, avec l'ouverture 24, une circulation d'air de refroidissement et le passage des conducteurs électriques du stator.

### Porte-balais

On voit sur les figures 7 et 8 que le porte-balais 30 comporte d'une part une partie de support 31, sur laquelle sont fixés des balais 32 conventionnels, encore appelés « brushes », destinés à venir en contact, par une extrémité 32a, avec des bagues 110 du collecteur du rotor, encore appelées « slip rings », et d'autre part une partie de fixation 33, destinée à s'engager dans une glissière 35 réalisée sur la face intérieure de la paroi transversale 14 du carter 2 et avec celui-ci, cette glissière 35 étant verticale dans l'exemple considéré. Les balais 32 sont reliés à des pattes 32b de raccordement des conducteurs électriques d'alimentation du rotor, non représentés.

Une gorge 39, est formée entre les parties de support 31 et de fixation 33 pour coopérer avec des retours 36 de la glissière 35.

La partie de fixation 33 comporte une extension 37 pourvue d'un trou 38 pour le passage d'une vis d'immobilisation destinée à s'engager dans la paroi transversale 14.

Le porte-balais comporte des voiles de rigidification 31a et 33a associés respectivement aux parties de support 31 et de fixation 33 et qui s'étendent sensiblement parallèlement à un plan contenant l'axe géométrique de rotation X et confondu avec le plan de coupe de la figure 2.

Les parties de support 31 et de fixation 33 sont réalisées dans l'exemple décrit d'une seule pièce par moulage de matière plastique isolante.

Le porte-balais 30 est fixé sur le carter 2 en étant d'abord introduit par la première ouverture 24 à l'intérieur du carter 11, en faisant coulisser ensuite la partie de fixation 33 dans la glissière 35, puis le porte-balais 30 est immobilisé axialement dans la glissière 35 grâce à une vis introduite dans le trou 38 et coopérant avec la paroi transversale 14.

### Fixation de l'alternateur sur le moteur thermique

Dans l'exemple considéré, la fixation de l'alternateur sur le moteur s'effectue au moyen d'un organe de liaison 120 que l'on a représenté isolément sur les figures 16 et 17.

Cet organe de liaison 120 comporte une plaque 130 traversée par une ouverture centrale 121 pour permettre le passage de l'extrémité de l'arbre du rotor à accoupler avec l'arbre du moteur thermique.

La plaque 130 comporte un premier ensemble de trous 122 destinés à permettre sa fixation sur le moteur thermique et un deuxième ensemble de trous 123 destinés à permettre la fixation de la bride 13 de l'alternateur. Dans l'exemple illustré, des écrous 125 sont soudés sur la plaque 120 en regard de chaque trou 123, du côté destiné à faire face au moteur thermique.

On voit sur la figure 17 que la plaque 120 est non plane, et qu'elle peut comporter des nervures de rigidification 131. La plaque 120 présente une première surface plane 126 dans le voisinage de sa périphérie extérieure, destinée à venir en appui contre la bride 13 du carter 2, et une deuxième surface plane 127 bordant l'ouverture 121 et destinée à venir en appui contre le moteur thermique. Les deux surfaces 126 et 127 sont décalées axialement d'une distance supérieure à l'épaisseur des écrous 125.

Des parties saillantes 128 sont destinées à coopérer avec le carter, étant par exemple soudées sur la plaque 130, afin de contribuer au centrage de l'organe de liaison sur l'alternateur.

Pour fixer l'alternateur sur le moteur thermique, on commence par fixer la plaque 130 sur ce dernier, en introduisant des éléments de fixation tels que des vis dans les trous 122, puis l'alternateur peut être fixé sur la plaque 130 en introduisant des éléments de fixation tels que des vis dans les passages 40 et les trous 123.

On remarquera que de par la disposition des passages 40 à l'extérieur de l'enveloppe du corps cylindrique 12, il est très facile de mettre en place les éléments de fixation du carter de l'alternateur sur l'organe de liaison 120. Les éléments de fixation peuvent être vissés par exemple au moyen d'une clé sans avoir à engager cette dernière au travers d'une ouverture de sortie d'air de refroidissement, contrairement aux alternateurs connus.

Bien entendu, l'invention n'est pas limitée à l'exemple de réalisation qui vient d'être décrit.

On peut notamment, sans sortir du cadre de la présente invention, réaliser le carter autrement.

Dans toute la description, y compris les revendications, l'expression « comportant un » doit être comprise comme étant synonyme de « comportant au moins un », sauf si le contraire est spécifié.

## Revendications

1. Machine tournante électrique, comportant :
- un carter (2) de forme allongée,
- un rotor ayant un arbre pouvant tourner à l'intérieur du carter autour d'un axe géométrique de rotation (X),
- un ventilateur (9) entraîné en rotation par le rotor,
machine **caractérisée par le fait que** le carter comporte au moins une grille (14) d'entrée de l'air et au moins une grille (21, 22) de sortie de l'air qui sont réalisées d'une seule pièce l'une avec l'autre et avec le carter.

2. Machine selon la revendication précédente, **caractérisée par le fait que** le carter (2) est réalisé par fonderie, notamment en aluminium injecté.

3. Machine selon la revendication précédente, **caractérisée par le fait que** le carter (2) comporte à une première extrémité longitudinale une bride (13) et à une deuxième extrémité longitudinale, opposée à la première, une paroi d'extrémité ajourée, réalisée d'une seule pièce avec le carter et formant la grille (14) d'entrée d'air.

4. Machine selon la revendication 3, **caractérisée par le fait que** la bride (13) est réalisée d'une seule pièce avec le carter.

5. Machine selon l'une des deux revendications immédiatement précédentes, **caractérisée par le fait que** la paroi d'extrémité (14) comporte, sur sa face intérieure, un relief (35, 36) permettant la fixation d'un porte-balais (30).

6. Machine selon la revendication précédente, **caractérisée par le fait que** le relief comporte une glissière (35, 36) et **par le fait que** le porte-balais (30) est configuré pour pouvoir coulisser dans la glissière lors de son montage dans le carter (2).

7. Machine selon l'une quelconque des revendications précédentes, **caractérisée par le fait que** le carter comporte deux grilles latérales (21, 22) réalisées d'une seule pièce avec le carter et situées respectivement sur les côtés gauche et droit du carter lorsque l'alternateur est observé selon l'axe géométrique de rotation (X) du rotor.

8. Machine selon l'une quelconque des revendications précédentes, **caractérisée par le fait que** le carter (2) comporte au moins une volute (91) débouchant sur une grille (21, 22).

9. Machine selon l'une quelconque des revendications précédentes, **caractérisée par le fait que** le carter comporte au moins une grille comportant des barreaux (22) ayant chacun un axe longitudinal (Z) orienté sensiblement parallèlement à un plan perpendiculaire à l'axe géométrique de rotation du rotor (X).

10. Machine selon la revendication précédente, **caractérisée par le fait que** les barreaux (22) présentent un côté radialement intérieur usiné.

11. Machine selon l'une quelconque des revendications précédentes, **caractérisée par le fait que** le carter comporte des extensions (18) de support d'un capot (3), ces extensions comportant des ouvertures (19) d'entrée d'air, le carter comportant au moins une ouverture (24 ; 25) débouchant à l'intérieur du capot pour permettre une aspiration de l'air sous celui-ci, durant le fonctionnement de l'alternateur.

12. Machine selon l'une quelconque des revendications précédentes, **caractérisée par le fait que** le carter comporte des nervures axiales (41) non usinées, sur lesquelles repose un stator.

13. Machine selon l'une quelconque des revendications précédentes, **caractérisée par le fait que** le carter (2) comporte un corps cylindrique (12) et une bride (13), cette bride (13) comportant des passages (40) pour des éléments de fixation ayant des axes (Y) situés radialement à l'extérieur de l'enveloppe du corps cylindrique (12).

14. Machine selon l'une quelconque des revendications précédentes, **caractérisée par le fait qu'**elle constitue un alternateur.

## Claims

1. An electric rotary machine comprising:
- a casing (2) of elongate shape;
- a rotor having a shaft capable of turning inside the casing about an axis of rotation (X);
- a fan (9) rotated by the rotor;
machine **characterized by** the fact that the casing comprises at least one air inlet grid (14) and at least one air outlet grid (21,22), both of which are made integrally one with each other and with the casing.

2. A machine according to claim 1, wherein the casing (2) is made as a casting, in particular out of injected aluminum.

3. A machine according to the preceding claim, **characterized by** the fact that the casing (2) has a flange (13) at a first longitudinal end, and has a perforated end wall at a second longitudinal end opposite from the first, the end wall being made integrally with the casing and forming the air inlet grid (14).

4. A machine according to claim 3, **characterized by** the fact that the flange (13) is made integrally with the casing.

5. A machine according to any one of the two preceding claims, **characterized by** the fact that the end wall (14) comprises a portion in relief (35,36) on an inside face serving to fix a brush carrier (30).

6. A machine according to the preceding claim, **characterized by** the fact that the portion in relief comprises a slideway (35,36), and by the fact that the brush carrier (30) is configured to be capable of sliding in the slideway while being mounted in the casing (2).

7. A machine according to any one of the preceding claims, **characterized by** the fact that the casing has two side grids (21,22) made integrally with the casing and situated respectively on the left and right sides of the casing when the alternator is observed along the axis of rotation (X) of the rotor.

8. A machine according to any one of preceding claims, **characterized by** the fact that the casing (2) comprises at least one volute (91) opening out to a grid (21,22).

9. A machine according to any one of the preceding claims, **characterized by** the fact that the casing has at least one grid including bars (122), each having a longitudinal axis (2) extending substantially parallel to a plane perpendicular to the axis of rotation (X) of the rotor.

10. A machine according to the preceding claim, **characterized by** the fact that the bars (22) present a radially inner side that is machined.

11. A machine according to any one of the preceding claims, **characterized by** the fact that the casing comprises extensions (18) for supporting a cover (3), said extensions comprising air inlet openings (19), the casing having at least one opening opening (24,25) out to the inside of the cover to enable air to be sucked in beneath it when the alternator is in operation.

12. A machine according to any one of the preceding claims, **characterized by** the fact that the casing comprises non-machined axial splines (41) against which a stator rests.

13. A machine according to any of the preceding claims, **characterized by** the fact that the casing (2) comprises a cylindrical body (12) and a flange (13), the flange (13) having passages (40) for fixing elements having axes (Y) situated radially outside the envelope of the cylindrical body (12).

14. A machine according to any one of the preceding claims, **characterized by** the fact that it constitutes an alternator.

## Patentansprüche

1. Rotierende elektrische Maschine mit
einem länglichen Gehäuse (2),
einem Rotor mit einer im Innern des Gehäuses um eine geometrische Rotationsachse (X) drehbaren Welle, und
einem mit dem Rotor drehbaren Lüfter (9),
**dadurch gekennzeichnet, dass** das Gehäuse mindestens ein Lufteintrittsgitter (14) und mindestens ein Luftaustrittsgitter (21, 22) aufweist, die miteinander und mit dem Gehäuse einstückig ausgebildet sind.

2. Maschine nach Anspruch 1, **dadurch gekennzeichnet, dass** das Gehäuse (2) gegossen ist, insbesondere aus Aluminiumspritzguss besteht.

3. Maschine nach Anspruch 2, **dadurch gekennzeichnet, dass** das Gehäuse (2) an einem ersten Längsende einen Flansch (13) und an einem dem ersten entgegengesetzten zweiten Längsende eine mit dem Gehäuse einstückige durchbrochene Stirnwand aufweist, die das Lufteintrittsgitter (14) bildet.

4. Maschine nach Anspruch 3, **dadurch gekennzeichnet, dass** der Flansch (13) mit dem Gehäuse einstückig ausgebildet ist.

5. Maschine nach Anspruch 3 oder 4, **dadurch gekennzeichnet, dass** die Stirnwand (14) an ihrer Innenseite Anformungen (35, 36) zur Befestigung eines Bürstenträgers (30) aufweist.

6. Maschine nach Anspruch 5, **dadurch gekennzeichnet, dass** das die Anformungen eine Führungsschiene (35, 36) umfassen, in der der Bürstenträger (30) bei seinem Einbau in das Gehäuse (2) verschiebbar ist.

7. Maschine nach einem der vorhergehenden Ansprüche, **dadurch gekennzeichnet, dass** an das Gehäuse zwei Seitengitter (21, 22) angeformt sind, die bei Betrachtung des Wechselstromgenerators in Richtung längs der geometrischen Drehachse (X) des Rotors auf der linken und der rechten Seite des Gehäuses angeordnet sind.

8. Maschine nach einem der vorhergehenden Ansprüche, **dadurch gekennzeichnet, dass** das Gehäuse (2) mindestens eine an einem Gitter (21, 22) mündende Schnecke (91) aufweist.

9. Maschine nach einem der vorhergehenden Ansprüche, **dadurch gekennzeichnet, dass** das Gehäuse mindestens ein Gitter mit Stäben (22) aufweist, deren Längsachse (Z) jeweils im wesentlichen parallel zu einer zu der geometrischen Drehachse (X) des Rotors senkrechten Ebene verläuft.

10. Maschine nach Anspruch 9, **dadurch gekennzeichnet, dass** die Gitterstäbe (22) eine radial innere bearbeitete Seitenfläche haben.

11. Maschine nach einem der vorhergehenden Ansprüche, **dadurch gekennzeichnet, dass** das Gehäuse zur Aufnahme einer Abdeckung (3) Ansätze (18) mit Lufteintrittsöffnungen (19) sowie mindestens eine innerhalb der Abdeckung mündende Öffnung (24; 25) aufweist, um während des Betriebs des Wechselstromgenerators ein Ansaugen von Luft unter der Abdeckung zu ermöglichen.

12. Maschine nach einem der vorhergehenden Ansprüche, **dadurch gekennzeichnet, dass** das Gehäuse unbearbeitete Axialrippen (41) aufweist, auf denen ein Stator aufliegt.

13. Maschinen nach einem der vorhergehenden Ansprüche, **dadurch gekennzeichnet, dass** das Gehäuse (2) einen zylindrischen Hauptteil (12) und einen Flansch (13) mit Durchgangsöffnungen (40) für Befestigungselemente aufweist, deren Achsen (Y) radial außerhalb des Mantels des zylindrischen Hauptteils (12) verlaufen.

14. Maschine nach einem der vorhergehenden Ansprüche, **dadurch gekennzeichnet, dass** sie einen Wechselstromgenerator bildet.
